# EUROPEAN PATENT APPLICATION

(11) **EP 2 902 307 A2**
(43) Date of publication of application: **05.08.2015**
(21) Application number: 15151042.7
(22) Date of filing: 14.01.2015
(51) Int. Cl.: B62M 6/50, B60L 11/00

(54) **Motor control system for electric bicycle and method of controlling the same**

(30) Priority: 29.01.2014 KR 20140011337
(71) Applicant: Samsung Electro-Mechanics Co., Ltd., Suwon-Si, Gyeonggi-Do 443-743 (KR)
(72) Inventor: Kim, Gyoung Tai, 443-743 Gyeonggi-Do (KR); Kim, Se Joo, 443-743 Gyeonggi-Do (KR); Ha, Keun Soo, 443-743 Gyeonggi-Do (KR); Joung, Ho Son, 443-743 Gyeonggi-Do (KR)
(74) Representative: Heine, Christian Klaus

(57) **Abstract**

There is provided a motor control system for an electric bicycle including: a gradient detection unit detecting left and light gradients of the bicycle; and a motor driving control unit controlling a driving of a driving motor, wherein the motor driving control unit controls the driving of the driving motor depending on the left and right gradient values of the bicycle which are detected by the gradient detection unit when the bicycle is driven.

## Description

### CROSS-REFERENCE TO RELATED APPLICATION

This application claims the benefit of Korean Patent Application No. 10-2014-0011337, filed on January 29, 2014, entitled "Motor Control System For Electric Bicycle And Method Of Controlling The Same" which is hereby incorporated by reference in its entirety into this application.

### BACKGROUND

The present disclosure relates to a motor control system for an electric bicycle and a method of controlling the same.

A bicycle is configured of a front wheel which is a steering wheel and a rear wheel which is a driving wheel which are disposed at a front and a rear of a frame in a straight line and is configured to go forward by allowing a passenger to press a pedal connected to a rear wheel so as to rotate the rear wheel. The bicycle includes a power transmission apparatus, such as a chain and a gear which transmit power generated from the pedal to the rear wheel.

In particular, the power transmission apparatus of the chain type is configured to include a driving sprocket which is mounted at one side of the pedal, a driven sprocket which has a diameter smaller than that of the driving sprocket and is mounted at the rear wheel which is the driving wheel, and a chain which connects the driving sprocket to the driven sprocket.

According to the above configuration, when the passenger presses the pedal, the driving sprocket integrally mounted with the pedal rotates and at the same time the rear wheel connected to the driven sprocket also rotates by the chain, such that the bicycle goes forward.

Since the bicycle is driven by a pedal effort generated when the user is pedaling, the bicycle does not have much difficulty in traveling at a flat road, but when the bicycle drives up a slope, such as a hill, much effort is required.

To solve the problem, an electric bicycle mounted with a motor so as to be driven using a driving force of the motor in addition to the pedal effort of the user has been developed recently.

That is, the electric bicycle uses the motor driven with a battery and is configured to be driven with only the pedal effort of the user, only the force of the motor driven with the battery, or both of the pedal effort and the force of the motor.

When the existing electric bicycle drives a curve, the motor is driven regardless of the left and right gradient of the electric bicycle. In this case, the electric bicycle fall off due to the excessive motor assist and thus the user may be injured.

### [Related Art Document]

### [Patent Document]

(Patent Document 1) Korean Patent Laid-Open Publication No. 2012-0132593

### SUMMARY

An aspect of the present disclosure may provide a motor control system for an electric bicycle and a method of controlling the same capable of controlling a motor assist ratio depending left and right gradients of the bicycle.

According to an aspect of the present disclosure, a motor control system for an electric bicycle may include: a gradient detection unit detecting left and right gradients of the bicycle; and a motor driving control unit controlling a driving of a driving motor, wherein the motor driving control unit controls the driving of the driving motor depending on the left and right gradient values of the bicycle which are detected by the gradient detection unit when the bicycle is driven.

The motor driving control unit may include a memory unit in which the left and right gradient setting values of the bicycle are stored.

The motor driving control unit may compare the left and right gradient values detected by the gradient detection unit with the left and right gradient setting values stored in the memory unit to control the assist ratio of the driving motor.

The motor driving control unit may compare the left and right gradient values detected by the gradient detection unit with the left and right gradient setting values stored in the memory unit to determine whether the bicycle drives a curve.

If it is determined that the bicycle drives the curve, the motor driving control unit may reduce the assist ratio of the driving motor.

The gradient detection unit may include a three-axis acceleration sensor.

The 3-axis acceleration sensor may be configured of a gyro sensor.

According to another aspect of the present disclosure, a method of controlling a motor control system for an electric bicycle may include: detecting, by a gradient detection unit, left and right gradients of the bicycle; and controlling, by a motor control driving unit, a driving of a driving motor depending on the left and right gradient values of the bicycle detected by the gradient detection unit.

In the detecting of the gradient, the gradient detection unit may detect the left and right gradients of the bicycle by a 3-axis acceleration sensor.

The 3-axis acceleration sensor may be configured of a gyro sensor.

In the controlling of the driving of the driving motor, the left and right gradient values detected by the gradient detection unit may compare with the left and right gradient setting values stored in the memory unit to control an assist ratio of the driving motor.

The memory unit may be included in the motor driving control unit.

In the controlling of the driving of the driving motor, the left and right gradient values detected by the gradient detection unit may compare with the left and right gradient setting values stored in the memory unit to determine whether the bicycle drives a curve.

In the controlling of the driving of the driving motor, if it is determined that the bicycle drives the curve, the assist ratio of the driving motor may be reduced.

According to still another aspect of the present disclosure, a method of controlling a motor control system for an electric bicycle may include: detecting, by a gradient detection unit, left and right gradients of the bicycle; determining, by a motor driving control unit, whether the bicycle drives a curve by comparing left and right gradient values of the bicycle detected in the detecting of the gradient with a setting value stored in a memory unit; and if it is determined that the bicycle drives the curve, controlling, by the motor driving control unit, the assist ratio of the driving motor.

In the detecting of the gradient, the gradient detection unit may detect the left and right gradients of the bicycle by a 3-axis acceleration sensor.

The 3-axis acceleration sensor may be configured of a gyro sensor.

In the controlling of the assist ratio, the assist ratio of the driving motor may be controlled depending on the assist setting value in response to the left and right gradients stored in the memory unit.

The memory unit may be included in the motor driving control unit.

In the controlling of the assist ratio, if it is determined that the bicycle drives the curve, the assist ratio of the driving motor may be reduced.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is an exemplified diagram illustrating an electric bicycle in which a motor control system for the electric bicycle according to an exemplary embodiment of the present disclosure is used; and
FIG. 2 is a configuration diagram illustrating the motor control system for the electric bicycle according to the exemplary embodiment of the present disclosure.

### DETAILED DESCRIPTION

The objects, features and advantages of the present disclosure will be more clearly understood from the following detailed description of the exemplary embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present disclosure, when it is determined that the detailed description of the related art would obscure the gist of the present disclosure, the description thereof will be omitted.

Hereinafter, exemplary embodiments of the present disclosure will be described in detail with reference to the accompanying drawings.

Hereinafter, preferred embodiments of the present disclosure will be described in detail with reference to the accompanying drawings.

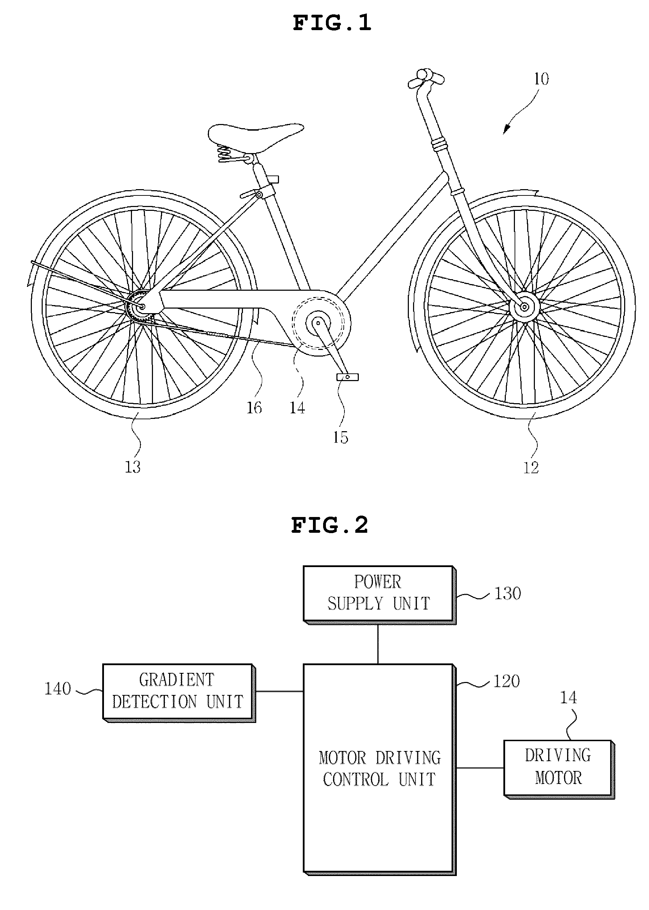

FIG. 1 is an exemplified diagram illustrating an electric bicycle in which a motor control system for the electric bicycle according to an exemplary embodiment of the present disclosure is used and FIG. 2 is a configuration diagram illustrating the motor control system for the electric bicycle according to the exemplary embodiment of the present disclosure.

Referring to FIGS. 1 and 2, the motor control system for an electric bicycle according to the exemplary embodiment of the present disclosure includes a gradient detection unit 140 and a motor driving control unit 120 to control a driving of a driving motor 14.

First, a front wheel 12 and a rear wheel 13 of the electric bicycle 10 are supported by a frame (not illustrated) and a chain 16 rotating by a power transmission means is engaged with the rear wheel 13. In this case, the power transmission means may be configured of a pedal 15 and a driving motor 14. Here, the pedal 15 rotates when being applied with a user force and delivers a rotation force to the chain 16. Further, the driving motor 14 is connected to a power supply unit 130 and when the driving motor 14 is applied with power, a rotation shaft of the driving motor 14 rotates and thus the driving motor may deliver the rotation force to the chain 16. In this case, when the user force is applied to the pedal 15 to drive the electric bicycle 10, the bicycle easily drives an uphill and the like due to the assist of the driving motor 14 even when the user applies a small force to the pedal 15.

Here, a detailed configuration to deliver the rotation force to the chain 16 through the pedal 15 or the driving motor 14 is well known to those skilled in the art and therefore the detailed description thereof will be omitted.

The gradient detection unit 140 detects left and right gradients of the electric bicycle 10 to transfer left and right gradient values of the electric bicycle 10 which are a detection value detected by the motor driving control unit 120.

Further, the gradient detection unit 140 may be configured to include a 3-axis acceleration sensor. In this case, the 3-axis acceleration sensor may be configured of, for example, a gyro sensor.

Here, the 3-axis acceleration sensor may measure accelerations of x, y, and z axes to sense the gradient of the electric bicycle 10 and the acceleration of the electric bicycle 10.

The motor driving control unit 120 receives the left and right gradient values which are a detection value transferred from the gradient detection unit 140 to control the driving of the driving motor 14. In this case, the motor driving control unit 120 may control the on/off of electricity application from the power supply unit 130 to the driving motor 14 to control the driving of the driving motor 14. Here, the power supply unit 130 may be, for example, a battery.

Further, the motor driving control unit 120 compares the received left and right gradient values with left and right gradient setting values stored in a memory unit (not illustrated) to control the driving of the driving motor 14, thereby controlling the assist ratio of the driving motor 14. Here, the memory unit may be included in the motor driving control unit 120, but the present disclosure is not necessarily limited thereto, and for example, the memory unit may be separately provided from the motor driving control unit 120 to be electrically connected to the motor driving control unit 120.

Further, the motor driving control unit 120 may compare the left and right gradient values detected by the gradient detection unit with the left and right gradient setting values stored in the memory unit to determine whether the electric bicycle 10 drives the curve.

In this case, when the motor driving control unit 120 determines that the electric bicycle 10 drives the curve, the motor driving unit 120 may reduce the assist ratio of the driving motor 14.

In the motor control system for an electric bicycle according to the exemplary embodiment of the present disclosure configured as described above, the gradient detection unit 140 detects the left and right gradients of the electric bicycle 10 to enable the motor driving control unit 120 to control the assist ratio of the driving motor 14. Therefore, when the electric bicycle 10 drives the curve, it is possible to prevent the electric bicycle 10 from falling off to left and right sides, such that an injury of a passenger may be prevented, thereby greatly improving the stability.

Referring to FIGS. 1 and 2, the method of controlling a motor control system for an electric bicycle according to the exemplary embodiment of the present disclosure includes detecting a gradient and controlling the driving of the driving motor 14.

Hereinafter, the method of controlling a motor control system for an electric bicycle according to the exemplary embodiment of the present disclosure will be described in more detail with reference to FIGS. 1 and 2.

Referring to FIG. 2, in the detecting of the gradient, the gradient detection unit 140 detects the gradient of the electric bicycle 10.

The gradient detection unit 140 detects the gradient of the electric bicycle 10 to transfer the left and right gradient values of the electric bicycle 10 which are the detection values to the motor driving control unit 120.

Here, the gradient detection unit 140 may detect the left and right gradients of the bicycle using the 3-axis acceleration sensor. Here, the 3-axis acceleration sensor may measure the accelerations of x, y, and z axes to sense the gradient of the electric bicycle 10 and the acceleration of the electric bicycle 10. Further, the 3-axis acceleration sensor may be configured of, for example, a gyro sensor.

In the controlling of the driving of the driving motor 14, the motor driving control unit 120 receives the left and right gradient values of the bicycle which are the detection value transferred from the gradient detection unit 140 to control the driving of the driving motor 14. Here, the motor driving control unit 120 compares the received left and right gradient values with the left and right gradient setting values stored in the memory unit (not illustrated) to control the driving of the driving motor 14, thereby controlling the assist ratio of the driving motor 14. In this case, the motor driving control unit 120 may control the assist ratio of the driving motor 14 depending on the motor assist setting value in response to the left and right gradients of the electric bicycle 10 stored in the memory unit.

In this case, the motor driving control unit 120 may control the on/off of electricity application from the power supply unit 130 to the driving motor 14 to control the driving of the driving motor 14. Further, the power supply unit 130 may be, for example, a battery.

Here, the memory unit may be included in the motor driving control unit 120, but the present disclosure is not necessarily limited thereto, and for example, the memory unit may be separately provided from the motor driving control unit 120 to be electrically connected to the motor driving control unit 120.

Meanwhile, the method of controlling a motor control system for an electric bicycle according to the exemplary embodiment of the present disclosure may further include determining.

Here, in the determining, the motor driving control unit 120 may compare the left and right gradient values of the electric bicycle 10 detected by the detecting of the gradient with the setting value stored in the memory unit to determine whether the electric bicycle 10 drives the curve.

In this case, when the motor driving control unit 120 determines based on the determining that the electric bicycle 10 drives the curve, in the controlling of the driving of the driving motor, the motor driving control unit 120 may reduce the assist ratio of the driving motor 14.

In the motor control system for an electric bicycle according to the exemplary embodiment of the present disclosure configured as described above, the left and right gradients of the electric bicycle 10 are detected in the detecting of the gradient to control the assist ratio of the driving motor 14 in the controlling of the driving of the driving motor. Therefore, when the electric bicycle 10 drives the curve, it is possible to prevent the electric bicycle 10 from falling off to left and right sides, such that an injury of a passenger may be prevented, thereby greatly improving the stability.

As set forth above, according to the exemplary embodiments of the present disclosure, it is possible to prevent the bicycle from falling off at the time of driving the curve by controlling the motor assist ratio depending on the left and right gradients of the bicycle. Further, it is possible to greatly improve the stability by preventing the injury of the passenger from occurring.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope and spirit of the disclosure.

Accordingly, any and all modifications, variations or equivalent arrangements should be considered to be within the scope of the disclosure, and the detailed scope of the disclosure will be disclosed by the accompanying claims.

## Claims

1. A motor control system for an electric bicycle, comprising:
a gradient detection unit detecting left and right gradients of the bicycle; and
a motor driving control unit controlling a driving of a driving motor,
wherein the motor driving control unit controls the driving of the driving motor depending on the left and right gradient values of the bicycle which are detected by the gradient detection unit when the bicycle is driven.

2. The motor control system of claim 1, wherein the motor driving control unit includes a memory unit in which left and right gradient setting values of the bicycle are stored.

3. The motor control system of claim 2, wherein the motor driving control unit compares the left and right gradient values detected by the gradient detection unit with the left and right gradient setting values stored in the memory unit to control an assist ratio of the driving motor.

4. The motor control system of claim 1, wherein the motor driving control unit compares the left and right gradient values detected by the gradient detection unit with left and right gradient setting values stored in a memory unit to determine whether the bicycle drives a curve.

5. The motor control system of claim 4, wherein if it is determined that the bicycle drives the curve, the motor driving control unit reduces an assist ratio of the driving motor.

6. The motor control system of claim 1, wherein the gradient detection unit includes a three-axis acceleration sensor.

7. The motor control system of claim 6, wherein the 3-axis acceleration sensor is configured of a gyro sensor.

8. A method of controlling a motor control system for an electric bicycle, comprising:
detecting, by a gradient detection unit, left and right gradients of the bicycle; and
controlling, by a motor driving control unit, a driving of a driving motor depending on the left and right gradient values of the bicycle detected by the gradient detection unit.

9. The method of claim 8, wherein in the detecting of the gradient, the gradient detection unit detects the left and right gradients of the bicycle by a 3-axis acceleration sensor.

10. The method of claim 9, wherein the 3-axis acceleration sensor is configured of a gyro sensor.

11. The method of claim 8, wherein in the controlling of the driving of the driving motor, the left and right gradient values detected by the gradient detection unit compare with left and right gradient setting values stored in a memory unit to control an assist ratio of the driving motor.

12. The method of claim 11, wherein the memory unit is included in the motor driving control unit.

13. The method of claim 8, wherein in the controlling of the driving of the driving motor, the left and right gradient values detected by the gradient detection unit compare with left and right gradient setting values stored in a memory unit to determine whether the bicycle drives a curve.

14. The method of claim 13, wherein in the controlling of the driving of the driving motor, if it is determined that the bicycle drives the curve, an assist ratio of the driving motor is reduced.

15. A method of controlling a motor control system for an electric bicycle, comprising:
detecting, by a gradient detection unit, left and right gradients of the bicycle;
determining, by a motor driving control unit, whether the bicycle drives a curve by comparing the left and right gradient values of the bicycle detected in the detecting of the gradient with a setting value stored in a memory unit; and
if it is determined that the bicycle drives the curve, controlling, by the motor driving control unit, an assist ratio of a driving motor.

16. The method of claim 15, wherein in the detecting of the gradient, the gradient detection unit detects the left and right gradients of the bicycle by a 3-axis acceleration sensor.

17. The method of claim 16, wherein the 3-axis acceleration sensor is configured of a gyro sensor.

18. The method of claim 15, wherein in the controlling of the assist ratio, the assist ratio of the driving motor is controlled depending on an assist setting value in response to the left and right gradients stored in the memory unit.

19. The method of claim 15, wherein the memory unit is included in the motor driving control unit.

20. The method of claim 15, wherein in the controlling of the assist ratio, if it is determined that the bicycle drives the curve, the assist ratio of the driving motor is reduced.
